# EUROPEAN PATENT APPLICATION

(11) **EP 1 494 231 A1**
(43) Date of publication of application: **05.01.2005**
(21) Application number: 04012906.6
(22) Date of filing: 01.06.2004
(51) Int. Cl.: G11B 17/028

(54) **Clamping mechanism of disc unit**

(30) Priority: 30.06.2003 JP 2003186426
(71) Applicant: ORION ELECTRIC CO., Ltd., Takefu-City, Fukui 915-8555 (JP)
(72) Inventor: Azai, Kouji, Takefu-city Fukui 915-8555 (JP)
(74) Representative: Goddar, Heinz J., Dr.

(57) **Abstract**

It is an object of the invention to provide a clamping mechanism of a disc unit capable of sufficiently securing a moving distance of a clamper (5) while reducing parts count compared with a conventional clamping mechanism and of rendering the disc unit low-profile. A cap (41) made of a steed plate is engaged in a turntable (4) and a magnet (7) which is magnetized at a bottom face of the turntable (4) at a turntable side is engaged in the clamper (5). The clamper (5) is freely engaged in an opening (60) of a support member (6), and it is held by the support member (6) in a state where the magnetized bottom face of the magnet (7) is attracted to the support member (6) to float. When the turntable (4) rises, the cap (41) approaches the magnet (7) so that they attract each other, thereby setting the clamper (5) on the turntable (4).

## Description

### FIELD OF THE INVENTION

The invention relates to a clamping mechanism of a disc unit for setting a disc such as a CD, a DVD and so forth on the disc unit.

### BACKGROUND OF THE INVENTION

In the case where a disc such as a CD and so forth is set on a disc unit, the disc is placed on a pallet which is in turn carried in the disc unit, then it is held on a turntable and subsequently clamped by the turntable and a clamper, thereby completing the setting of the disc on the disc unit. Such a clamping mechanism of the disc unit is improved variously as a disc unit is rendered low profile.

For example, JP A 7-244908 discloses a clamper with a built-in magnet and positioned over a turntable, wherein when the turntable is in a rest position, the clamper is attracted to a first magnetic body disposed thereover and held in a higher position, and when the turntable is positioned in a read-only level, the clamper is attracted to a second magnetic body inside the turntable to be pulled down, thereby clamping the disc. Further, JP A 10-40620 discloses that a first permanent magnet member is integrated into a turntable, and a second permanent magnetic member is provided on a ceiling plate of a disc unit, wherein an attraction plate having a strong magnetism and integrated into a clamper is attracted to and held by a second permanent magnet while a magnetic force of the first permanent magnet member is rendered stronger than that of the second permanent magnet member, and when a turntable moves toward a disc support position, the clamper is attracted to the first permanent magnet member to clamp the disc on the turntable. Still further, JP A 10-241248 discloses that a magnetic portion is provided on a clamper, and a magnet is disposed respectively on a chassis and a turntable over the clamp, wherein when the turntable rises to approach the clamper, a magnet of the turntable attracts the magnetic portion to chuck the disc.

According to each of the foregoing patent references, the magnet or the magnetic body is integrated into the clamper, and also the magnet or the magnetic body is integrated into the turntable, wherein the clamper and the turntable are brought into contact with each other by a force of attraction of both the clamper and the turntable to hold the disc therebetween. When the turntable moves away from the clamper, it is attracted to the magnet or the magnetic body disposed over the clamper so that the clamper moves upward. With such a configuration, the movement of the clamper is effected by a magnetic force so that the configuration is simplified and the disc unit can be rendered more compact.

However, the conventional clamping mechanism set forth above has the following drawbacks. Firstly, the magnet or the magnetic body needs to be disposed over the clamper, and a moving space where the clamper is pulled up needs to be secured. Accordingly, it needs a height of the disc unit by a disposition space where the magnet or the magnetic body is disposed or a moving space where the clamper is pulled up, making it difficult to render the disc unit further low-profile. It is considered to render the moving space of the clamper narrower, but a moving distance of the clamper is rendered small by that amount, thereby increasing a danger of contact between the disc to be carried and the clamper. Further, when the clamper is separated from the turntable to be attracted to the magnet or the magnetic body disposed thereover, a colliding sound is generated. As a result, a buffer member is needed, thereby increasing parts count.

### SUMMARY OF THE INVENTION

It is an object of the invention to provide a clamping mechanism of a disc unit capable of sufficiently securing a moving distance of a clamper while reducing parts count compared with a conventional clamping mechanism, thereby rendering the disc unit more low-profile.

To achieve the above object, the clamping mechanism of a disc unit according to a first aspect of the invention is characterized in comprising a turntable for holding a disc and having a first magnetic body, a clamper having a magnet magnetized at the turntable side alone, wherein the clamper detachably brings into close contact with the turntable owing to a force of attraction of a magnetized portion of the magnet relative to the first magnetic body so as to clamp the disc between itself and the turntable, and a support member for supporting the clamper so as to be movable between a mounting position where the clamper approaches the turntable to bring into close contact with the turntable and an evacuation position where the clamper moves away from the turntable, wherein the support member has a second magnetic body and the clamper is held at the evacuation position owing to a force of attraction of the magnetized portion of the magnet relative to the second magnetic body

The clamping mechanism of a disc unit according to a second aspect of the invention is characterized in that the second magnetic body of the support member is provided along a face of the support member which traverses a moving area of the magnet of the clamper.

The clamping mechanism of a disc unit according to a third aspect of the invention is characterized in that the support member has an opening through which the clamper is freely engaged in the plate-shaped second magnetic body thereof and the clamper is held at the evacuation position in a state where a peripheral portion of the opening and the magnetized portion of the magnet approach each other.

With such a configuration set forth above, the magnet mounted on the clamper is magnetized at the turntable side alone so that the turntable side of the clamper is held by the force of attraction of the magnet when the clamper is held at the evacuation position, thereby avoiding the collision of the clamper against a chassis and so forth caused by attraction of the clamper to an opposite side of the turntable as made in the conventional clamping mechanism. Accordingly, it is not necessary to provide a magnetic body or a magnet for attracting the clamper on the opposite side of the turntable, thereby making a degree of freedom of design large. Since the installing space is used as a moving space of the clamper and a stroke of the clamper is made long, the clamper can be evacuated not to hinder the carriage of the disc when the disc is carried in the disc unit. Further, the clamping mechanism can be rendered low profile by that amount. Still further, since a magnet and so forth are dispensed with, the structure of the clamping mechanism is simplified, thereby reducing parts count. Accordingly, a manufacturing cost of the clamping mechanism can be reduced.

Further, since the second magnetic body of the support member is provided along a face of the support member traversing a moving area of the magnet of the clamper, when the magnet which is magnetized at the turntable side alone is attracted to the second magnetic body, the clamper is held by the support member at the side face relative to the moving direction so that the clamper can be held without colliding with the support member. Still further, since the support member itself is configured by the plate-shaped second magnetic body to form the opening of the clamper, the clamper can be held at a peripheral portion of the opening so that the clamper can be surely held at the evacuation position with a very simple structure.

### BRIEF DESCRIPTION OF THE DRAWINGS

Fig. 1 is a schematic perspective view of a disc unit employing an embodiment of the invention;
Fig. 2 is a partially enlarged sectional view according to the embodiment of the invention;
Fig. 3 is a partially enlarged sectional view according to the embodiment of the invention;
Fig. 4 is an exploded perspective view of a clamper according to the embodiment of the invention;
Figs. 5(A) to 5(D) are views for assembling the clamper according to the embodiment of the invention;
Figs. 6(A) to 6(C) are views for explaining a magnet according to the embodiment of the invention; and
Figs. 7(A) to 7(D) are views for explaining operations of the disc unit according to the embodiment of the invention.

### PREFERRED EMBODIMENT OF THE INVENTION

A clamping mechanism of a disc unit according to an embodiment of the invention is now described in detail hereinafter. Since the embodiment described hereinafter is a preferred embodiment for carrying out the invention, it is limited variously in technical point of view. However, unless it is described to limit the invention, the invention is not limited to the embodiment.

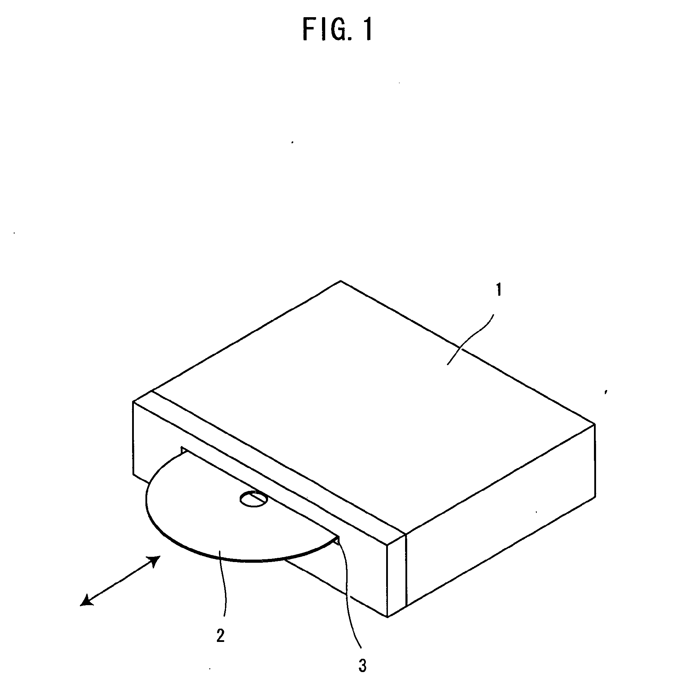

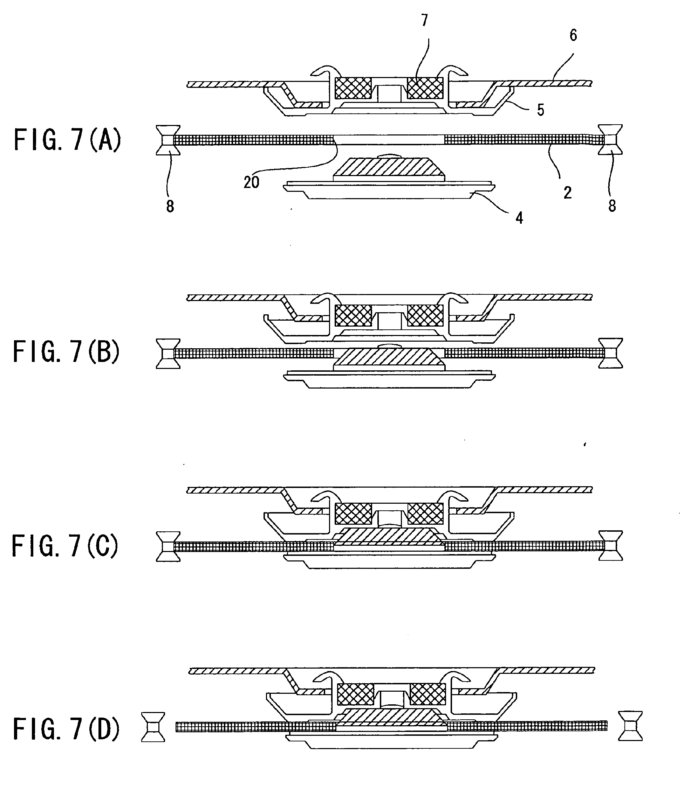

Fig. 1 is a perspective view showing an external appearance of a disc unit 1. When a disc 2 is inserted into an insertion opening 3 provided in a front face of the disc unit 1, a sensor, not shown, detects the insertion of the disc 2 and a carriage mechanism 8 (see Fig. 7) carries the disc 2 in the disc unit 1 at a set position. The carriage mechanism 8 further carries the disc 2 in the interior of the disc unit 1 together with a tray after it places the disc 2 on the tray which is pulled out from the interior of the disc unit 1. There is exemplified a circular storage medium such as a CD and a DVD which is bored circularly at the center through which a turntable 4 is inserted.

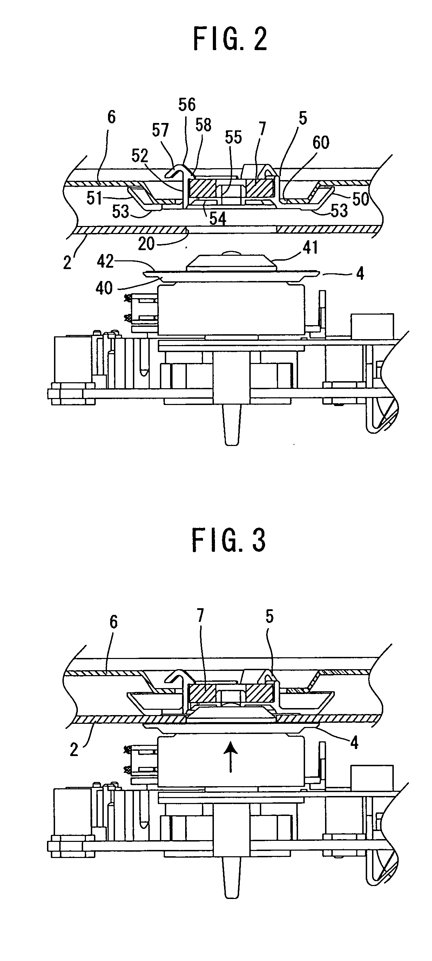

The disc 2 thus carried in the interior of the disc unit 1 is set such that a center hole 20 thereof is positioned over the turntable 4. Fig. 2 is a partially enlarged sectional view showing a state where the center hole 20 is set over the turntable 4. In this state, since the disc 2 is carried in the disc unit 1, the turntable 4 moves to a standby position under the disc 2. Further, Fig. 3 is a partially rises to move to an operation position wherein the turntable 4 clamps the disc 2 together with a clamper 5 positioned thereover.

The turntable 4 comprises a discoid table body 40 and a circular cap 41 which projects from the upper face of the table body 40, and it is connected to a motor shaft, not shown. Both the table body 40 and the cap 41 are made of a metallic material such as a steel plate and so forth. A ring-shaped rubber sheet 42 is adhered onto the upper face of the table body 40 so as to surround the cap 41, thereby preventing the slippage of the mounted disc 2 and functioning as a buffer member.

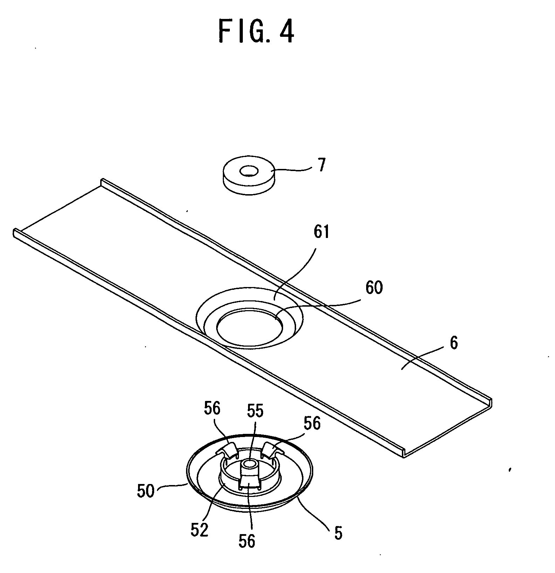

A clamper 5 is disposed above the turntable 4 while spaced away from the turntable 4 needed for carrying the disc 2 in the disc unit 1. The clamper 5 is freely engaged in an opening 60 which is bored in a support member 6. As shown in Fig. 4, the support member 6 is formed by working a metallic plate such as a steel plate and so forth in a belt shape having a predetermined width, and it is fixed to a body frame, not shown, at both sides thereof. The circular opening 60 is bored at the center of the support member 6, and a stepped portion 61 is formed concentrically and directed downward by one step. The clamper 5 comprises a clamper body 50 made of resin and a ring-shaped magnet 7 which is engaged in the clamper body 50. The clamper body 50 comprises a stopper 51 on which a belt-shaped portion having a predetermined height stands upright on a discoid circumferential edge thereof and a cylindrical guide 52 which stands upright at the center thereof. As shown in Fig. 2, the stopper 51 is brought into contact with the stepped portion 61 of the support member 6 so as to surround the stepped portion 61, thereby holding the clamper 5 at an evacuation position when the clamper 5 moves upward. A pressure face 53 which presses against the front face of the disc 2 is formed on the bottom face of the stopper 51 when the face of the disc 2 is clamped as shown in Fig. 3, and a recess 54 in which the cap 41 of the turntable 4 is engaged is formed on an inner side of the pressure face 53. A concentrically cylindrical protrusion 55 is provided inside the cylindrical guide 52, and the ring-shaped magnet 7 is engaged and fixed between the guide 52 and the cylindrical protrusion 55. Three claw portions 56 protrude from the upper end of the guide 52. The claw portions 56 are formed of outer claw portions 57 which protrude outward and incline downward and inner claw portions 58 which protrude inward and incline downward.

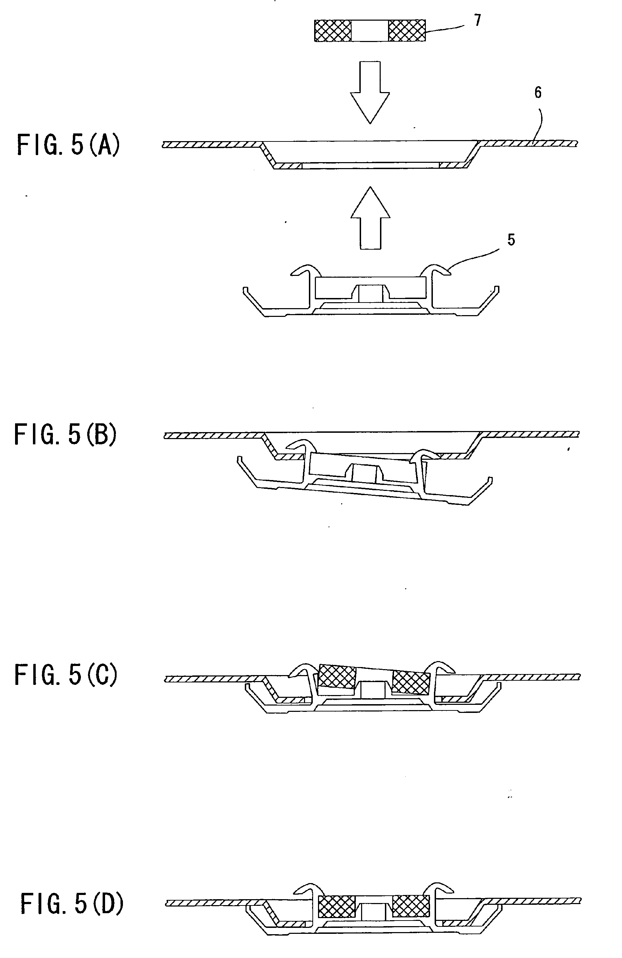

In the case where the clamper 5 is fixed to the opening 60 of the support member 6, steps shown in Figs. 5(A) to 5(D) are taken. The magnet 7 is fixed to the opening 60 from above the support member 6 and the clamper body 50 is fixed to the opening 60 from below the support member 6 (Fig. 5(A)). Then, the clamper body 50 is inserted into the opening 60 (Fig. 5(B)). At this time, although the claw portions 56 protruding from the upper end of the guide 52 strike against the opening 60, the outer claw portions 57 of the claw portions 56 bend inward as the claw portions 56 are kept inserted into the opening 60, so that the claw portions 56 pass through the opening 60. If the clamper body 50 is intended to be pulled out in an opposite direction, the claw portions 56 which passed through the opening 60 are not come off because the outer claw portions 57 are caught by the opening 60. The magnet 7 is engaged in the guide 52 from above after the guide 52 passed through the opening 60 (Fig. 5(C)). When the magnet 7 is pushed inside the guide 52, the inner claw portions 58 of the claw portions 56 contact the magnet 7, however, the inner claw portions 58 bend outward as the magnet 7 is kept pushed inside the guide 52 so that the upper face of the magnet 7 is caught by the inner claw portions 58 (Fig. 5(D)). Accordingly, the magnet 7 is firmly fixed inside the guide 52.

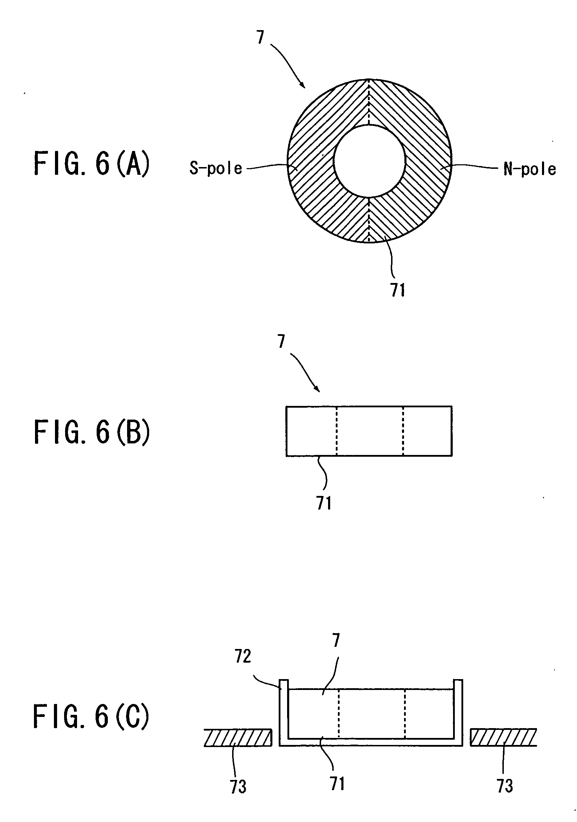

Fig. 6(A) shows a bottom view of the magnet 7 and Fig. 6(B) shows a front view thereof. The magnet 7 is magnetized at a bottom face 71 alone to become bipolar. A material of the magnet 7 is sufficient to be any strong magnetized material which can be magnetized at the bottom face alone, and it has preferably a strong force of attraction such as a neodymium magnet so that the magnet itself can be downsized. The magnet 7 which is magnetized at the bottom face 71 is inserted into a container 72, and a plate-shaped magnetic body 73 is disposed around the container 72 as shown in Fig. 6(C), so that the bottom face of the magnet 7 is held at the position closest to the magnetic body 73 owing to the force of attraction at the magnetized portion. At this time, if the magnetizing force and the weight of the magnet are properly adjusted, the magnet 7 can be held at this position in a stable state. Accordingly, the magnet 7 can be held in a state as if it floated relative to the magnetic body 73.

According to the invention, the moving and holding operation of the clamper 5 can be effected utilizing the characteristics of the magnet 7 which is magnetized at the bottom face 71. A concrete example of the moving and holding operation is illustrated in Figs. 7(A) to 7(D). First, as shown in Fig. 7(A), the disc 2 is carried between the turntable 4 and the clamper 5 by the carriage mechanism 8 from an external device. In this case, the turntable 4 is previously moved to a lower standby position. Further, as explained with reference to Fig. 6, the magnet 7 which is fixed to the interior of the clamper 5 is magnetized at the bottom face which faces the turntable side, and the support member 6 is made of a steel plate serving as a magnetic body so that the force of attraction which attracts the support member 6 acts on the bottom face of the magnet 7, and the entire clamper 5 is moved to the evacuation position in a state where the entire clamper 5 floats. The stopper 51 is brought into contact with the stepped portion 61 so as to surround the stepped portion 61 at the evacuation position and the guide 52 is freely engaged in the opening 60 so that the clamper 5 is not come off from the evacuation position even if an impact is applied thereto.

Next, as shown in Fig. 7(B), the turntable 4 rises and the cap 41 is inserted into the center hole 20 of the disc 2. Since the cap 41 is made of a steel plate serving as a magnetic body, as the cap 41 rises to approach the bottom face of the clamper 5, the cap 41 and the magnetized bottom face of the magnet 7 attract to each other. The force of attraction between the bottom face of the magnet 7 and the cap 41 increases in magnetic line of the magnet 7 which passes through the cap 41 as the cap 41 approaches the bottom face of the magnet 7, and becomes greater than the force of attraction between itself and a peripheral edge of the opening 60 of the support member 6 so that the clamper 5 is attracted downward and the recess 54 which is formed in the bottom face of the clamper 5 is engaged in the cap 41 as shown in Fig. 7(C). In this state, the magnetized bottom face of the magnet 7 is attracted to the cap 41 so that the disc 2 is firmly clamped by the table body 40 and the pressure face 53 of the clamper 5. Thereafter, the carriage mechanism 8 is moved away from the disc 2 so that the disc 2 is rotatably driven (Fig. 7(D)).

In the case of releasing the clamping mechanism, steps which are reversed to the operation steps shown in Figs. 7(A) to 7(D) are taken. That is, the turntable 4 is moved to the lower standby position after the disc 2 is gripped by the carriage mechanism 8. At this time, if the turntable 4 is moved while surpassing the force of attraction between the cap 41 and the magnetized bottom face of the magnet 7, the clamper 5 which is moved away from the cap 41 is again returned to the evacuation position which is close to the support member 6 owing to the force of attraction between the magnetized bottom face of the magnet 7 and the support member 6. If the disc unit 1 becomes in a state shown in Fig. 7(A), the disc 2 is carried out from the disc unit 1 by the carriage mechanism 8.

As mentioned above, since the clamper 5 is held at the evacuation position owing to the force of attraction between the magnet 7 and the support member 6, it is not necessary to provide separately a magnetic body over the clamper 5, which is made conventionally, so that a space for moving the clamper 5 upward can be secured, thereby sufficiently securing a moving distance of the clamper 5. It is possible to sufficiently take a spacing between the clamper 5 and the turntable 4 by moving the clamper 5 upward so that the carrying operation of the disc 2 can be effected without any obstacle. Further, since there is no objects to collide above the clamper 5 when the clamper 5 is pulled upward to locate at the evacuation position, it is possible to prevent the generation of noise which has been made conventionally when the clamper 5 collides against a magnetic body and so forth which are provided above the clamper 5. Still further, since the clamper itself can be formed of two parts without providing a magnetic body separately, parts count can be reduced and manufacturing steps can be simplified.

According to the preferred embodiment set forth above, a disc unit which is a type to carry one disc therein is explained, however it is possible to employ the clamp mechanism of the invention to a disc unit which is a changer type for housing a plurality of discs. The invention can be also applied to a disc unit in which the disc is arranged in a vertical direction in addition to the disc unit in which the disc is arranged in a lateral position as set forth in the preferred embodiment. That is, if the magnet is magnetized at the turntable side, the clamper can be moved and held in the same manner as the preferred embodiment.

As mentioned above in detail, according to the invention, since the magnet mounted on the clamper is magnetized at the turntable side alone, the clamper is held owing to a force of attraction of the magnet at the turntable side when the clamper is held at the evacuation position, thereby preventing the turntable from colliding against a chassis and so forth, which has been made so far and caused by the attraction of the clamper to the opposite side of the turntable. Accordingly, it is not necessary to install a magnetic body and a magnet for attracting the clamper to the opposite side of the turntable, so that the freedom of design becomes large. If the installing space is used as a moving space of the clamper and a stroke of the clamper is taken long, the clamper can be evacuated not to obstruct the carriage of the disc. Still further, the clamp mechanism can be made low-profile. More still further, since the magnet and so forth are not needed, the structure can be simplified and parts count can be reduced. Accordingly, a manufacturing cost can be reduced.

Still further, the second magnetic body of the support member can be provided along the face which traverses a moving area of the magnet of the clamper, the magnet magnetized at the turntable side alone is attracted to the second magnetic body, the clamper can be held by the support member relative to the side face of the moving direction so that the clamper can be held without colliding against the support member.

Still further, since the support member itself is configured by the plate-shaped second magnetic body to form the opening of the clamper, the clamper can be held at a peripheral portion of the opening so that the clamper can be surely held at the evacuation position with a very simple structure.

The disclosure of Japanese Patent Application No. 2003-186426 including specification, claims, and drawings, is incorporated herein by reference.

The features disclosed in the foregoing description, in the claims and/or in the accompanying drawings may, both separately and in any combination thereof, be material for realising the invention in diverse forms thereof.

## Claims

1. A clamping mechanism of a disc unit comprising:
a turntable (4) for holding a disc (2) and having a first magnetic body;
a clamper (5) having a magnet (7) magnetized at the turntable (4) side alone, wherein the clamper (5) detachably brings into close contact with the turntable (4) owing to a force of attraction of a magnetized portion (71) of the magnet (7) relative to the first magnetic body so as to clamp the disc (2) between itself and the turntable (4); and
a support member (6) for supporting the clamper (5) so as to be movable between a mounting position where the clamper (5) approaches the turntable (4) to bring into close contact with the turntable (4) and an evacuation position where the clamper (5) moves away from the turntable (4);
wherein the support member (6) has a second magnetic body (73) and the clamper (5) is held at the evacuation position owing to the force of attraction of the magnetized portion (71) of the magnet (7) relative to the second magnetic body (73).

2. A clamping mechanism of a disc unit according to Claim 1, wherein the second magnetic body (73) of the support member (6) is provided along a face of the support member (6) traversing a moving area of the magnet (7) of the clamper (5).

3. A clamping mechanism of a disc unit according to Claim 2, wherein the support member (6) has an opening (60) through which the clamper (5) is freely engaged in the plate-shaped second magnetic body (73) thereof and the clamper (5) is held at the evacuation position in a state where a peripheral portion of the opening (60) and the magnetized portion (71) of the magnet (7) approach each other.
